# EUROPEAN PATENT APPLICATION

(11) **EP 4 832 622 A1**
(43) Date of publication of application: **28.10.2026**
(21) Application number: 23961745.9
(22) Date of filing: 18.12.2023
(51) Int. Cl.: H04W 72/12

(54) **METHOD AND APPARATUS FOR TRANSMITTING INDICATION INFORMATION, AND DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIN, Yanan, Dongguan, Guangdong 523860 (CN)
(74) Representative: Novagraaf Technologies
(86) International application number: PCT/CN2023/139527
(87) International publication number: WO 2025/129396

(57) **Abstract**

and apparatus are provided, which relate to the field of communication technology. The method The present application belongs to the technical field of communications. Disclosed are a method and apparatus for transmitting indication information, and a device, a medium and a program product. The method is executed by a first communication device. The method comprises: receiving or sending first indication information, wherein the first indication information is used for indicating a scheduling parameter of at least one information group. In the method, scheduling can be performed by taking an information group as a unit, such that the overheads of control signaling can be saved on during information scheduling, thereby improving the transmission efficiency of a communication system.

## Description

### TECHNICAL FIELD

The present disclosure relates to the field of communication technology, and particularly to a method and apparatus for transmitting indication information, and a device, medium, and program product thereof.

### RELATED ART

In certain communication scenarios, the information exchange between communication devices exhibits regular characteristic information, such as data arrival time, data volume, data transmission direction, data type, and other transmission characteristic information.

How to enhance the transmission efficiency of this part of information is a technical challenge that future communication systems need to address.

### SUMMARY

The present disclosure provides a method and apparatus for transmitting indication information, and a device, medium, and program product thereof. The technical solutions are at least as follows.

According to one aspect of the embodiments of the present disclosure, a method for transmitting indication information is provided. The method is performed by a communication device, and includes:
transmitting or receiving first indication information, wherein the first indication information is used to indicate a scheduling parameter of at least one information group.

According to another aspect of the embodiments of the present disclosure, an apparatus for transmitting indication information is provided. The apparatus includes:
a transceiver module, configured to transmit or receive first indication information, wherein the first indication information is used to indicate a scheduling parameter of at least one information group.

According to another aspect of the embodiments of the present disclosure, a communication device is provided, and includes:
a processor; a transceiver connected to the processor; and a memory configured to store executable instructions of the processor;
wherein the processor is configured to load and execute the executable instructions to perform the method for transmitting indication information according to the above aspects.

According to another aspect of the embodiments of the present disclosure, a chip is provided, and includes programmable logic circuitry and/or program instructions. When the chip operates, the chip is used to perform the method for transmitting indication information as described in the various aspects above.

According to another aspect of the embodiments of the present disclosure, a computer-readable storage medium is provided, in which at least one program is stored. The at least one program is loaded and run by a processor to perform the method for transmitting indication information as described in the above aspects.

According to another aspect of the embodiments of the present disclosure, a computer program product or computer program is provided, and includes computer instructions stored in a computer-readable storage medium. The processor retrieves the computer instructions from the computer-readable storage medium and executes them to perform the method for transmitting indication information as described in the various aspects above.

The technical solutions provided in the embodiments of the present disclosure may include the following beneficial effects.

By transmitting or receiving the first indication information, which is used to indicate the scheduling parameter of an information group, this method performs scheduling with the granularity of "one information group", which can save the overhead of control signaling and improve the transmission efficiency of the communication system.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 illustrates a schematic diagram of a communication system provided by some exemplary embodiments of the present disclosure;
FIG. 2 shows a schematic diagram of information transmission provided by some exemplary embodiments of the present disclosure;
FIG. 3 shows a flowchart of a method for transmitting indication information provided by some exemplary embodiments of the present disclosure;
FIG. 4 shows a flowchart of a method for transmitting indication information provided by some exemplary embodiments of the present disclosure;
FIG. 5 illustrates a time-frequency diagram of a method for transmitting indication information provided by some exemplary embodiments of the present disclosure;
FIG. 6 illustrates a time-frequency diagram of a method for transmitting indication information provided by some exemplary embodiments of the present disclosure;
FIG. 7 illustrates a time-frequency diagram of a method for transmitting indication information provided by some exemplary embodiments of the present disclosure;
FIG. 8 illustrates a time-frequency diagram of a method for transmitting indication information provided by some exemplary embodiments of the present disclosure;
FIG. 9 illustrates a time-frequency diagram of a method for transmitting indication information provided by some exemplary embodiments of the present disclosure;
FIG. 10 illustrates a time-frequency diagram of a method for transmitting indication information provided by some exemplary embodiments of the present disclosure;
FIG. 11 illustrates a time-frequency diagram of a method for transmitting indication information provided by some exemplary embodiments of the present disclosure;
FIG. 12 illustrates a time-frequency diagram of a method for transmitting indication information provided by some exemplary embodiments of the present disclosure;
FIG. 13 illustrates a time-frequency diagram of a method for transmitting indication information provided by some exemplary embodiments of the present disclosure;
FIG. 14 shows a flowchart of a method for transmitting indication information provided by some exemplary embodiments of the present disclosure;
FIG. 15 shows a block diagram of an apparatus for transmitting indication information provided in some exemplary embodiments of the present disclosure;
FIG. 16 shows a block diagram of an apparatus for transmitting indication information provided by some exemplary embodiments of the present disclosure; and
FIG. 17 illustrates a structural schematic diagram of a communication device provided in some exemplary embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Here, exemplary embodiments will be described in detail, with examples illustrated in the accompanying drawings. When the following description refers to the drawings, unless otherwise indicated, the same numerals in different drawings represent the same or similar elements. The implementations described in the following exemplary embodiments do not represent all implementations consistent with the present disclosure. Instead, they are merely examples of devices and methods consistent with certain aspects of the present disclosure as detailed in the accompanying claims.

The terms used in the present disclosure are solely for the purpose of describing specific embodiments and are not intended to limit the present disclosure. The use of the singular forms "a," "an," "the," and "a kind of" in the present disclosure and the accompanying claims is also intended to include the plural form, unless the context clearly indicates otherwise. It should also be understood that the term "and/or" used herein refers to and includes any or all possible combinations of one or more associated listed items.

It should be understood that although the terms "first," "second," "third," and the like may be used herein to describe various pieces of information, such information should not be limited to these terms. These terms are only used to distinguish one type of information from another. For example, first information may also be referred to as second information, and similarly, second information is also referred to as first information, without departing from the scope of the present disclosure. The word "if," as used herein, may be interpreted as "in a case where," " in a case when," or "in response to determining that," depending on the context.

The technical solutions described in some embodiments of the present disclosure are applicable to various communication systems, such as a global system for mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolved system of the NR system, an LTE-based access to unlicensed spectrum (LTE-U) system on unlicensed spectrum, an NR-based access to unlicensed spectrum (NR-U) system on unlicensed spectrum, a non-terrestrial network (NTN) system, a universal mobile telecommunication system (UMTS), a wireless local area network (WLAN), a wireless fidelity (Wi-Fi), a 5th-generation (5G) system, a cellular Internet of things (IoT) system, a cellular passive IoT system, and are also applicable to subsequent evolved systems of the 5G NR system, as well as to 6G and subsequent evolved systems.

It should be understood that in some embodiments of the present disclosure, "5G" may also be referred to as "5G NR" or "NR".

It should be understood that in the description of the embodiments of the present disclosure, the term "correspond" can indicate a direct or indirect corresponding relationship between two items, or indicates an associated relationship between two items; and also indicates relationships such as indicating and being indicated, or configuring and being configured.

In the embodiments of the present disclosure, "predefinition" can be achieved by pre-storing corresponding codes, tables, or other means that can be used to indicate relevant information in devices (such as terminal devices and network devices). The specific implementation method is not limited in the present disclosure. For example, predefinition can refer to what is defined in a protocol.

In the embodiments of the present disclosure, the term "protocol" refers to the standard protocol in the communication field, including, for example, the LTE protocol, the NR protocol, and related protocols applied in the future communication systems, which is not limited in the present disclosure.

**Next, we will introduce the downlink data transmission mode**.

A communication system includes terminal devices and network devices. Taking the terminal device as user equipment (UE) and the network device as a base station as an example, the communication system typically supports the following two downlink data transmission modes.
(1) The UE receives downlink control signaling transmitted by the base station and receives downlink data transmission based on the parameter in the downlink control signaling. This scheduling mode is called dynamic scheduling. The advantage of dynamic scheduling lies in its ability to determine the transmission parameter based on real-time traffic volume and physical channel conditions, resulting in high transmission efficiency. The UE first receives downlink control signaling, and, based on the parameter in the downlink control signaling, receives a downlink data channel or transmits an uplink data channel. However, the UE needs to perform blind detection on the downlink control signaling, which increases the complexity of reception. In addition, the processing latency at the receiving end (UE) includes demodulating both the downlink control signaling and the downlink data. In situations where there is a large amount of downlink control signaling and downlink data, the processing latency at the receiving end is relatively high.
(2) The UE receives higher layer signaling transmitted by the base station and receives downlink data transmission based on the parameter in the higher layer signaling. In LTE and NR systems, this scheduling mode is called semi-persistent scheduling (SPS). For the UE with data that periodically arrives and has constant traffic and stable transmission conditions (such as not undergoing rapid movement), using the SPS can reduce the downlink control signaling overhead in the system and simplify the receiving processing at the receiving end (UE).

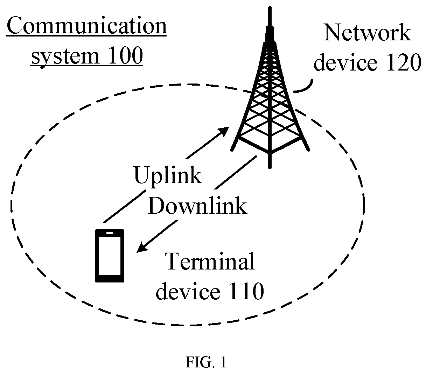

FIG. 1 illustrates a schematic diagram of a communication system 100 provided by some exemplary embodiments of the present disclosure. The communication system 100 includes a first communication device and a second communication device.

In some embodiments, the first communication device is the terminal device 110, and the second communication device is the network device 120; or, the first communication device is the network device 120, and the second communication device is the terminal device 110. The embodiments of the present disclosure do not impose any limitations on this, and the description will be given by taking the example where the first communication device is the terminal device 110 and the second communication device is the network device 120.

In the present disclosure, the terminal device 110 is also referred to as UE, an access terminal, a subscriber unit, a subscriber station, a mobile station, a remote station, a remote terminal, a mobile device, a user terminal, a terminal, a wireless communication device, a user agent, or a user device. The terminal device includes but is not limited to: a handheld device, a wearable device, a vehicle-mounted device, and an IoT device, such as a mobile phone, a tablet computer, an e-book reader, a laptop computer, a desktop computer, a TV, a game console, a mobile Internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self-driving, a wireless terminal in remote medical technology, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), or a customer premise equip

The network device 120 in the present disclosure provides wireless communication functions, and includes but is not limited to: an evolved Node B (eNB), a radio network controller (RNC), an Node B (NB), a base station controller (BSC), a base transceiver station (BTS), a home Node B (HNB), a baseband unit (BBU), an access point (AP) in Wi-Fi systems, a wireless relay node, a wireless backhaul node, a transmission point (TP), or a transmission and reception point (TRP), or the like. It can also be the next generation Node B (gNB) or transmission point (TRP or TP) in 5G mobile communication systems, or one or a group of antenna panels (including a plurality of antenna panels) of base stations in 5G systems, or network nodes constituting the gNB or TP, such as BBU or distributed unit (DU), or the like, or a base station in beyond 5G (B5G) mobile communication systems, 6G mobile communication systems, or core networks (CN), fronthaul, backhaul, a radio access network (RAN), network slicing, or the like, or a serving cell, a primary cell (PCell), a primary and secondary cell (PSCell), a special cell (SpCell), a secondary cell (SCell), a neighboring cell, or the like of terminal devices.

The terminal device 110 and the network device 120 communicate with each other via an air interface technology, such as a Uu interface.

Illustratively, there are two communication scenarios between the terminal device 110 and the network device 120: an uplink communication scenario and a downlink communication scenario. The uplink communication refers to the terminal device 110 transmitting signals to the network device 120; and the downlink communication refers to the network device 120 transmitting signals to the terminal device 110.

The technical solutions provided in the embodiments of the present disclosure can be applied to various communication systems, such as GSM systems, CDMA systems, WCDMA systems, GPRS, LTE systems, LTE-A systems, LTE frequency division duplex (FDD) systems, LTE time division duplex (TDD) systems, UMTS, Worldwide Interoperability for Microwave Access (WiMAX) communication systems, 5G mobile communication systems, NR systems, evolved systems of NR systems, LTE-U systems, NR-U systems, NTN systems, non-NTN systems, WLAN, Wi-Fi, cellular IoT systems, cellular passive IoT systems, as well as subsequent evolved systems of 5G NR systems, and also to B5G, 6G, and subsequent evolved systems.

In some embodiments of the present disclosure, "NR" may also be referred to as a 5G NR system or a 5G system. Within this context, the 5G mobile communication system may include a non-standalone (NSA) network and/or a standalone (SA) network.

The technical solutions provided in the embodiments of the present disclosure can also be applied to machine type communication (MTC), long term evolution-machine (LTE-M), device to device (D2D) networks, machine to machine (M2M) networks, IoT networks, or other networks. The IoT network may include, for example, the Internet of Vehicles (IoV). The communication modes in the IoV system are collectively referred to as vehicle-to-X (V2X, where X can represent anything), such as vehicle-to-vehicle (V2V) communication, vehicle-to-infrastructure (V2I) communication, vehicle-to-pedestrian (V2P) communication, or vehicle-to-network (V2N) communication.

In certain communication scenarios, several information exchanges between communication devices have agreed characteristic information, such as data arrival time, data volume, data transmission direction, data type, and other characteristic information. These several information exchanges may be regarded as an information group.

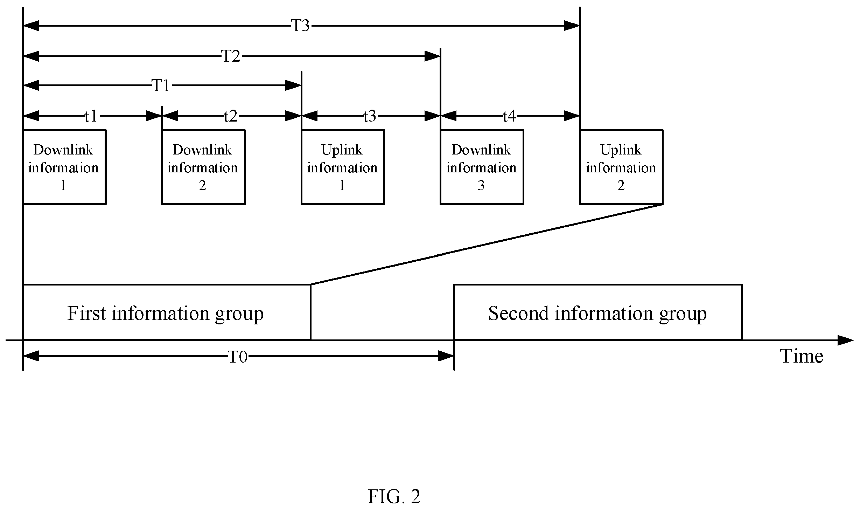

FIG. 2 illustrates a schematic diagram of an information group provided in some exemplary embodiments of the present disclosure. In a data transmission service, there are a plurality of information groups (also known as channel groups) between the receiving end (terminal device) and the transmitting end (network device), such as the first information group and the second information group. Each information group includes one or more pieces of information or one or more channels. Taking the first information group as an example, downlink information 1, downlink information 2, and downlink information 3 represent the information received by the terminal device and transmitted by the network device. The information types or contents of different pieces of downlink information may be different or the same. Uplink information 1 and uplink information 2 represent the information transmitted by the terminal device to the network device. The information types or contents of different pieces of uplink information may be different or the same.

The time interval between the start point of the first information group and the start point of the second information group is T0, the time interval between the start point of downlink information 1 and the start point of downlink information 2 is t1, the time interval between the start point of downlink information 2 and the start point of uplink information 1 is t2, the time interval between the start point of uplink information 1 and the start point of downlink information 3 is t3, the time interval between the start point of downlink information 3 and the start point of uplink information 2 is t4, the time interval between the start point of uplink information 1 and the start point of downlink information 1 is T1, the time interval between the start point of downlink information 3 and the start point of downlink information 1 is T2, and the time interval between the start point of uplink information 2 and the start point of downlink information 1 is T3.

In some communication scenarios, the communication between network devices and terminal devices occurs in groups, and the communications between groups may be periodic or periodic, which are completely random. The transmission characteristics between groups are similar, but the effective information contents carried are different, meaning that the information contents of different groups are not a repeated transmission of the same information content.

If the communication device can obtain the characteristic information of an information group, subsequent scheduling can be carried out based on the characteristic information of the information group after the transmission service is initiated. That is, the subsequent transmission and reception can be performed based on only a small amount of scheduling signaling. This is conducive to reducing the signaling overhead in the communication system, improving the transmission efficiency of the communication system, and also reducing the implementation complexity and power consumption of the communication device.

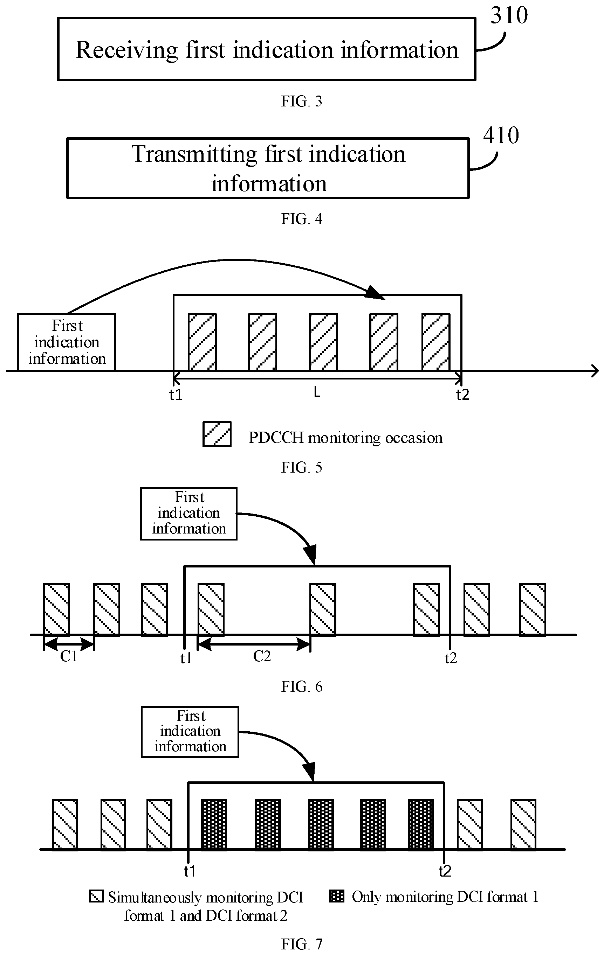

FIG. 3 shows a flowchart of a method for transmitting indication information provided by some exemplary embodiments of the present disclosure. The method is performed by a first communication device, which may be a terminal device or a network device. The method includes the following step:
**Step 310**: receiving first indication information, where the first indication information is used to indicate a scheduling parameter of at least one information group.

Each information group includes at least one piece of information or at least one channel. In some embodiments, the information group includes at least one piece of information or at least one channel that is monitored or transmitted within a period of time. In some embodiments, the first indication information is used to indicate the scheduling parameter of at least one information group. The scheduling parameter includes: a monitoring parameter for a piece of control information or a control channel, and/or a transmission parameter for a piece of data information or a data channel.

In summary, in the method provided in the embodiments, by receiving first indication information indicating the scheduling parameter of an information group, which includes at least one piece of information or at least one channel, scheduling is performed with the granularity of "one information group", thereby saving the overhead of scheduling signaling and improving the transmission efficiency of the communication system. Due to the reduction in scheduling signaling, the overhead of blindly detecting the control channel by terminal devices can also be reduced, further reducing the power consumption of terminal devices.

FIG. 4 illustrates a flowchart of a method for transmitting indication information provided by some exemplary embodiments of the present disclosure. The method is performed by a second communication device, which may be a network device or a terminal device. The method includes the following step:
**Step 410**: transmitting first indication information, where the first indication information is used to indicate a scheduling parameter of at least one information group.

Each information group includes at least one piece of information or at least one channel. In some embodiments, the information group includes at least one piece of information or at least one channel that is monitored or transmitted within a certain period of time. In some embodiments, the first indication information is used to indicate the scheduling parameter of at least one information group. The scheduling parameter includes: a monitoring parameter for a piece of control information or a control channel, and/or a transmission parameter for a piece of data information or a data channel.

In summary, in the method provided in the embodiments, by receiving first indication information indicating the scheduling parameter of an information group, which includes at least one piece of information or at least one channel, scheduling is performed with the granularity of "one information group", thereby saving the overhead of scheduling signaling and improving the transmission efficiency of the communication system. Due to the reduction in scheduling signaling, the overhead of blindly detecting the control channel by terminal devices can also be reduced, further reducing the power consumption of terminal devices
In further embodiments based on the embodiments shown in FIG. 3 or FIG. 4, the aforementioned information group and the first indication information are introduced as follows:

### Information Group

An information group includes at least one type of information, including at least one of the following: downlink control information; uplink control information; downlink data information; uplink data information; downlink information; uplink information; downlink synchronization information; broadcast information; multicast information; unicast information; terminal-specific downlink information; or reference signal information. An information group includes at least one type of channel, including at least one of the following: a downlink control channel; a downlink data/shared channel; an uplink control channel; an uplink data/shared channel; a downlink synchronization channel; a downlink broadcast channel; a downlink multicast channel; a downlink unicast channel; a terminal-specific channel; or an uplink synchronization channel.

In some embodiments, the information group includes at least two pieces of information or at least two channels. Each piece of information in the at least two pieces of information or at least two channels is data information or a data channel or control information or a control channel. Different pieces of information or different channels in the at least two pieces of information may be the same, different, or partially the same and partially different. In some embodiments, the at least two pieces of information or at least two channels differ in at least one of the following factors: the information type, the information content, the transmission channel, the information amount, the information format, the reliability requirement, or the latency requirement.

### Information Type

In some embodiments, the information types include at least one of the following: downlink information; uplink information; downlink synchronization information; broadcast information; multicast information; unicast information; terminal-specific downlink information; downlink control information; downlink data information; uplink synchronization information; terminal-specific uplink information; uplink control information; uplink data information; or reference signal.

In some embodiments, the information type of one of the at least two pieces of information is used to determine the physical channel used by the information. The correspondence between the information type and the physical channel includes at least one of the following: downlink information corresponds to a downlink channel; uplink information corresponds to an uplink channel; downlink synchronization information corresponds to a downlink synchronization channel; broadcast information corresponds to a broadcast channel; multicast information corresponds to a multicast channel; unicast information corresponds to a unicast channel; terminal-specific downlink information corresponds to a terminal-specific channel; downlink control information corresponds to a downlink control channel; downlink data information corresponds to a downlink shared channel; uplink synchronization information corresponds to an uplink synchronization channel; terminal-specific uplink information corresponds to a terminal-specific channel; uplink control information corresponds to an uplink control channel; or uplink data information corresponds to an uplink shared channel. Reference signals do not correspond to a physical channel and are transmitted directly.

In some embodiments, the information types include at least one of the following: configuration information; grant information; allocation information; downlink control information (DCI); physical layer control signaling; higher layer signaling; radio resource control (RRC) signaling; medium access control (MAC) signaling; uplink control information (UCI); feedback acknowledgment information; channel state information; scheduling request (SR); buffer status report (BSR); or uplink channel demodulation reference information.

In some embodiments, the feedback acknowledgment information includes at least one of the following: an acknowledgement (ACK), or a negative acknowledgement (NACK).

In some embodiments, the channel state information includes at least one of the following: channel-state information (CSI), a channel quality indicator (CQI), a precoding matrix indicator (PMI), or a rank indicator (RI).

### Information content

In some embodiments, the information content includes: uplink data and/or downlink data. In some embodiments, the uplink data and/or downlink data includes at least one of the following: a data packet; a transport block (TB); or a protocol data unit (PDU).

In some embodiments, the information content includes: an uplink synchronization signal and/or a downlink synchronization signal. In some embodiments, the uplink synchronization signal and/or the downlink synchronization signal include at least one of the following: a synchronization signal block (SSB); a physical random access channel (PRACH); a primary synchronization signal (PSS); or a secondary synchronization signal (SSS).

In some embodiments, the information content includes an uplink reference signal and/or a downlink reference signal. In some embodiments, the uplink reference signal and/or the downlink reference signal include at least one of the following: a demodulation reference signal (DMRS); a channel state information reference signal (CSI-RS); a sounding reference signal (SRS); or a phase tracking reference signal (PTRS).

### Transmission channel

In some embodiments, the transmission channel includes at least one of the following:
a downlink channel; a downlink synchronization channel; a broadcast channel; a multicast channel; a unicast channel; a terminal-specific channel; a downlink control channel; a downlink shared channel; an uplink channel; an uplink synchronization channel; an uplink control channel; or an uplink shared channel.

In some embodiments, the correspondence between the information type and the physical channel includes at least one of the following:
downlink information corresponds to the downlink channel; uplink information corresponds to the uplink channel; downlink synchronization information corresponds to the downlink synchronization channel; broadcast information corresponds to the broadcast channel; multicast information corresponds to the multicast channel; unicast information corresponds to the unicast channel; terminal-specific downlink information corresponds to the terminal-specific channel; downlink control information corresponds to the downlink control channel; downlink data information corresponds to the downlink shared channel; uplink synchronization information corresponds to the uplink synchronization channel; terminal-specific uplink information corresponds to the terminal-specific channel; uplink control information corresponds to the uplink control channel; or uplink data information corresponds to the uplink shared channel.

### Reliability requirement

In some embodiments, the reliability requirement includes at least one of the following: data integrity, data accuracy, or data reliability.

The data integrity represents the requirement to ensure that no data loss or corruption occurs during the information transmission; the data accuracy represents the requirement to ensure that the transmitted information is consistent with the original information, without errors or distortions; and the data reliability represents the requirement to ensure that the transmitted data is correctly received and processed on the target device, without data loss or disorder due to network issues.

### Latency requirement

In some embodiments, the latency requirement includes at least one of: real-time performance, latency stability, or a maximum latency requirement.

The real-time performance indicates that the latency of information transmission is very short, such as in video conferencing, online gaming, and other application scenarios that have high requirement for real-time performance; the latency stability indicates that the transmission latency of information is stable and will not cause data transmission anomalies due to network fluctuations or congestion; and the maximum latency requirement indicates the longest allowable latency for information transmission.

In different embodiments, the types of the aforementioned information groups include at least one of the following:
**Type 1**: Control information group; the control information group includes: at least one type of control information or control channel or monitoring occasion of the control channel.

**Type 2**: Data information group; the data information group includes: at least one type of data information or data channel or transmission opportunity of the data channel.

**Type 3:** Mixed information group. The mixed information group includes: at least one type of data information or data channel or transmission opportunity of the data channel, and at least one type of control information or control channel or monitoring occasion of the control channel.

### For Type 1: Control Information Group

In some embodiments, the first indication information is used to indicate the scheduling parameter of at least one information group. One or more of the at least one information group is the control information group. The scheduling parameters of the one or more information groups include the monitoring parameter of the control information group.

In some embodiments, the first indication information is used to indicate the monitoring parameters of one or more control information groups, and each control information group includes at least one piece of control information or at least one control channel.

In summary, in the method provided in the embodiments of the present disclosure, the monitoring parameter of a control information group is indicated through the first indication information, enabling the terminal device to perform group-based monitoring on control information within a certain period of time. This results in differences between the monitoring parameter during this period and the traditional periodic monitoring parameter. For example, monitoring of a control information group is only activated during the time period when there is downlink data scheduling, thereby reducing the blind detection of the physical downlink control channel (PDCCH) by the terminal device and lowering its power consumption.

In some embodiments, the control information includes, but is not limited to, at least one of uplink control information, downlink control information, or sidelink control information; and the control channel includes, but is not limited to, at least one of an uplink control channel, a downlink control channel, or a sidelink control channel.

In some embodiments, the monitoring parameter includes at least one of the following: a time parameter for monitoring the control channel; a search space or search space set for monitoring the control channel; a control resource set for monitoring the control channel; a monitoring occasion parameter for monitoring the control channel; a control information format to be monitored; a control information size to be monitored; or a candidate control channel to be monitored.

In some embodiments, the time parameter includes at least one of the following: the start time for monitoring the control channel; the end time for monitoring the control channel; or the duration for monitoring the control channel.

In some embodiments, the monitoring occasion parameter includes at least one of the following: the start monitoring occasion for monitoring the control channel; the end monitoring occasion for monitoring the control channel; or the number of monitoring occasions for monitoring the control channel.

The start time for monitoring the control channel may be indicated by an absolute time, or by a first offset value relative to the time-domain position of the first indication information, or by a second offset value relative to the time-domain position of the second information or channel. The second information or channel is the information or channel scheduled by the first indication information, or the information or channel associated with the first indication information, such as the information or channel with a preset timing relationship with the first indication information. In some embodiments, the second information or channel may be the hybrid automatic repeat request (HARQ)-ACK corresponding to the first indication information or the PUCCH channel where the HARQ-ACK is located; in some embodiments, the second information or channel may be the channel of the first or last data information among at least one data information scheduled by the first indication information.

The end time for monitoring the control channel may be indicated by an absolute time, or by a third offset value relative to the time domain position of the first indication information, or by a fourth offset value relative to the time domain position of the second information or channel. The second information or channel is the one scheduled by the first indication information, or the one associated with the first indication information, such as the one with a preset timing relationship with the first indication information. Furthermore, the end time may also be indicated by combining the start time and the duration. The end time for monitoring the control channel may be indicated by an absolute time, or by the number of monitoring occasions, or by combining the number of monitoring occasions and the time interval between adjacent monitoring occasions.

The aforementioned time unit can be at least one of a wireless frame, a subframe, a time slot, a symbol group, or a symbol.

In some embodiments, the monitoring parameter indicated by the first indication information for a control information group is a subset of the monitoring parameters configured for the control information or control channel. For example, the monitoring parameter indicated by the first indication information for a control information group is a proper subset of the pre-configured monitoring parameters for the control information or control channel. The pre-configured monitoring parameters may be periodic monitoring parameters or aperiodic monitoring parameters.

In some embodiments, the monitoring parameter indicated by the first indication information is a subset of pre-configured monitoring parameters, which may include at least one of the following:
- the monitoring time corresponding to the time parameter of the control information group is a part of the monitoring time corresponding to the time parameter pre-configured for the control information or control channel;
- the search space of the control information group is a part of the search space pre-configured for the control information or control channel;
- the search space set of the control information group is a part of the search space set pre-configured for the control information or control channel;
- the control resource set of the control information group is a part of the control resource set pre-configured for the control information or control channel;
- the monitoring occasion for the control information group is a part of the pre-configured monitoring occasion for the control information or control channel;
- the control information format of the control information group is a part of the control information format pre-configured for the control information or control channel;
- the control information size of the control information group is a part of the control information size pre-configured for the control information or control channel; or
- the candidate control channel of the control information group is a part of the candidate control channel pre-configured for the control information or control channel.

In some embodiments, taking the control information as a DCI and the control channel as a PDCCH as an example, the first indication information is used to indicate the monitoring parameter of a PDCCH transmission set. The PDCCH transmission set includes at least one DCI or PDCCH or PDCCH monitoring occasion.

In some embodiments, the monitoring parameter includes at least one of the following: a time parameter for monitoring the PDCCH; a search space or search space set for monitoring the PDCCH; a control resource set (CORESET) for monitoring the PDCCH; a monitoring occasion parameter for monitoring the control channel; a DCI format to be monitored; a DCI size to be monitored; or a PDCCH candidate to be monitored.

In some embodiments, the time parameter includes at least one of the following: the start time for monitoring the PDCCH; the end time for monitoring the PDCCH; or the duration for monitoring the PDCCH. The monitoring occasion parameter includes at least one of the following: the start monitoring occasion for monitoring the PDCCH; the end monitoring occasion for monitoring the PDCCH; or the number of monitoring occasions for monitoring the PDCCH.

Referring to FIG. 5 as an example, the terminal device receives the first indication information, and the first indication information is used to indicate the monitoring parameter of a PDCCH transmission set. The first indication information is used to instruct the terminal device to monitor the PDCCH within a certain period of time, and the period of time starts at time t1 and ends at time t2, with a duration of L. The indication mode at time t1 may be an offset value relative to the time-domain position (start position or end position) of the first indication information. If the offset value is represented by a time unit, then the subcarrier spacing corresponding to this time unit is the same as the subcarrier spacing corresponding to the PDCCH, or the subcarrier spacing corresponding to this time unit is the same as the subcarrier spacing corresponding to the first indication information. The duration L may be characterized by M time units, or by N PDCCH monitoring occasions.

In another possible design, a piece of first indication information is used to instruct the terminal device to start monitoring the PDCCH from time t1, and subsequently, another piece of first indication information is used to indicate the time t2 or the duration L.

In some embodiments, the first indication information is used to indicate the monitoring parameter of a PDCCH transmission set, and the monitoring parameter is a subset of pre-configured monitoring parameters configured for the PDCCH.

Referring to FIG. 6 as an example, assume that the terminal device receives RRC signaling in advance, and the RRC signaling pre-configures the PDCCH periodic monitoring parameter for the terminal device. The periodicity of an adjacent PDCCH monitoring occasions in the periodic monitoring parameter is C1. Then, the terminal device receives the first indication information, which is used to indicate the monitoring parameter within a certain period of time. The periodicity of an adjacent PDCCH monitoring occasion in the monitoring parameter is C2, which is twice that of C1. Other monitoring parameters remain unchanged compared to the periodic monitoring parameter.

Taking FIG. 7 as an example, assume that the terminal device receives RRC signaling in advance, and the RRC signaling pre-configures the PDCCH periodic monitoring parameter for the terminal device. Within the periodic monitoring parameter, DCI format 1 and DCI format 2 need to be monitored within each PDCCH monitoring occasion. Then, the terminal device receives the first indication information, which is used to indicate the monitoring parameter within a certain period of time. Within the monitoring parameter, only DCI format 1 needs to be monitored within each PDCCH monitoring occasion, while other monitoring parameters remain unchanged compared to the periodic monitoring parameter.

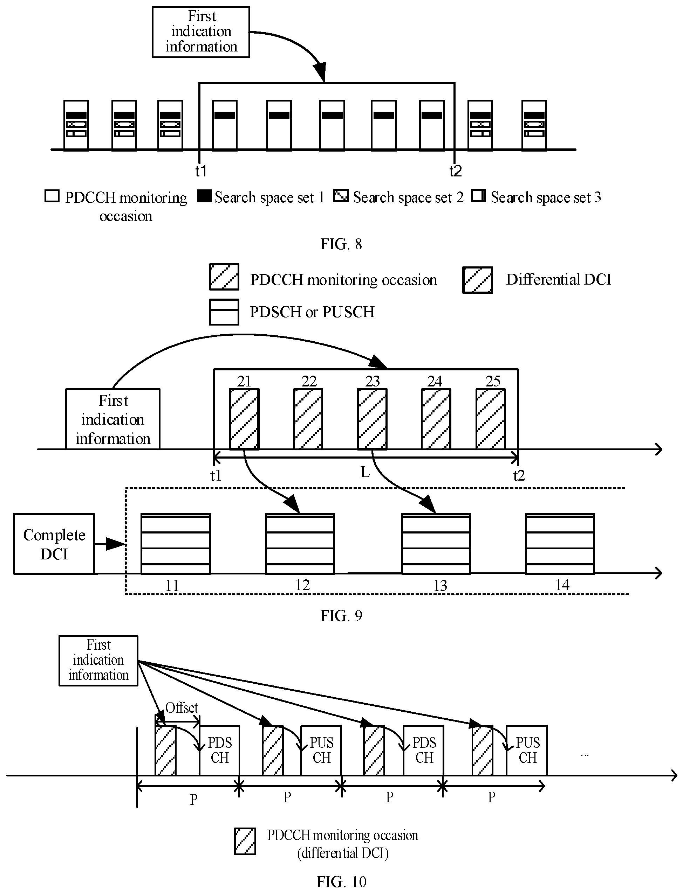

Taking FIG. 8 as an example, assume that the terminal device receives RRC signaling in advance, and the RRC signaling pre-configures the PDCCH periodic monitoring parameter for the terminal device. Within the periodic monitoring parameter, PDCCH candidates associated with search space sets 1 to 3 need to be monitored within each PDCCH monitoring occasion. Then, the terminal device receives the first indication information, which is used to indicate the monitoring parameter within a certain period of time. Within the monitoring parameter, only the PDCCH candidates associated with search space set 1 need to be monitored within each PDCCH monitoring occasion, while other monitoring parameters remain unchanged compared to the periodic monitoring parameter.

In summary, in the method provided in the embodiments of the present disclosure, the monitoring parameter of a control information group is indicated through the first indication information, and the monitoring parameter is a subset of the pre-configured monitoring parameters, so that the monitoring workload corresponding to the monitoring parameter of the control information group is less than the monitoring workload corresponding to the pre-configured monitoring parameter. Furthermore, the terminal can refrain from monitoring control information outside the time indicated by the first indication information, thereby enabling the terminal device to save more power in the control information group.
In some embodiments based on the above embodiments, the control information in the control information group indicated by the first indication information may include at least one of the first control information or the second control information;
The first control information is used to indicate at least one type of transmission parameter of at least one piece of data information or at least one data channel;

The second control information is used to indicate at least one type of: modification information, supplementary information, or cancellation information for the at least one piece of data information or the at least one data channel.

The first control information may be referred to as any one of complete control information, base control information, reference control information, complete DCI, base DCI, reference DCI, a complete DCI format, a base DCI format, or a reference DCI format; the second control information may be referred to as differential control information, modification control information, supplementary control information, cancellation control information, differential DCI, modification DCI, supplementary DCI, cancellation DCI, a differential DCI format, a modification DCI format, supplementary DCI format, or a cancellation DCI format. The first control information indicates most transmission parameters or common transmission parameters for at least one piece of data information or at least one data transmission, while the second control information indicates a small part or non-common transmission parameters for at least one piece of data information or at least one data channel.

It should be noted that the "at least one piece of data information or at least one data channel" indicated by the second control information may be all or a part of the "at least one piece of data information or at least one data channel" indicated by the first control information.

In summary, in the method provided in the embodiments, at least one piece of data information or at least one data channel is scheduled through the "complete + differential" approach of "first control information + second control information". The complete first control information is used to indicate the most transmission parameters or common transmission parameters, while the differential second control information is used to indicate a small part of transmission parameters that differ or are not common for one or more pieces of data information or one or more data channels. This achieves efficient scheduling for a set of irregular data transmissions, reduces the required overhead of the control information, saves signaling resources, and reduces air interface overhead.

In some embodiments, the modification information in the second control information is used to modify one or more transmission parameters among at least one type of transmission parameter; the supplementary information is used to supplement another transmission parameter other than at least one type of transmission parameter; and the cancellation information is used to cancel at least one piece of data information or at least one data channel.

In some embodiments, the data information or data channel includes at least one of uplink data information, downlink data information, uplink control information, or downlink control information.

In some embodiments, the transmission parameter includes at least one of the following: a parameter related to a time-domain resource, a parameter related to a frequency-domain resource, a parameter related to modulation, a transmission parameter related to coding, a parameter related to the amount of information, a parameter related to a reference signal, a parameter related to the reliability requirement, or a parameter related to the latency requirement.

In some embodiments, the transmission parameter includes at least one of the following: a time-domain resource; a frequency-domain resource; a spatial resource; a HARQ process (number); HARQ feedback-related information; a modulation and coding scheme (MCS); a transport block size (TBS); a transmission mode; an information amount; or a redundancy version.

In some embodiments, the transmission mode refers to dynamic scheduling transmission, semi-static scheduling transmission, single TRP transmission, or multi-TRP transmission of the data information or data channel, and the like. For example, SPS, Configured Grant (CG), physical uplink shared channel (PUSCH)+ physical downlink shared channel (PDSCH), and the like.

In some embodiments, the first control information indicates n transmission parameters among the time-domain resources; the frequency-domain resources; the spatial resources; the HARQ process number; the HARQ feedback; the MCS; the TBS; the transmission mode; the information amount; or the redundancy version. n is a positive integer. The second control information modifies at least one transmission parameter among the n transmission parameters, and this modification may be performed for the first data information or data channel. For example, if the MCS indicated by the first control information is MCS 5, the second control information modifies the MCS to MCS 4.

In some embodiments, the first control information indicates time-domain resources; frequency-domain resources; spatial resources; an HARQ process number; HARQ feedback; a MCS; a TBS; a transmission mode; an information amount; or n transmission parameters in redundancy versions. n is a positive integer. The second control information supplements m transmission parameters other than the n transmission parameters, and this supplementation may be performed for the first data information or data channel. For example, if the first control information does not indicate the HARQ process number, the second control information supplementarily indicates the HARQ process number.

In some embodiments, the first control information indicates a plurality of pieces of data information or a plurality of data channels, and the second control information cancels the first data information or data channel among the plurality of pieces of data information or the plurality of data channels. The first data information or data channel is a certain piece of data information or a certain data channel, or the remaining plurality of pieces of data information or the remaining plurality of data channels after the second control information.

Taking the monitoring occasion where the control information group includes a set of second control information as an example, the second control information is associated with at least one piece of data information or at least one data channel, and the at least one piece of data information or at least one data channel is all or a part of the data transmission indicated by the first control information. The association between the second control information and the at least one piece of data information or at least one data channel may be explicitly indicated or implicitly indicated.

In the case of explicit indication, the second control information carries identification information of at least one piece of data information or at least one data channel, and the at least one piece of data information or at least one data channel is data transmission associated with the second control information. Optionally, the identification information of the at least one piece of data information or at least one data channel includes at least one of the following: the index of the serving cell where the at least one piece of data information or at least one data channel is located; the index of the bandwidth part (BWP) where the at least one piece of data information or at least one data channel is located; the time-domain unit where the at least one piece of data information or at least one data channel is located; the frequency-domain unit where the at least one piece of data information or at least one data channel is located; the serial number of the at least one piece of data information or at least one data channel within the time-domain unit; the uplink indication corresponding to the at least one piece of data information or at least one data channel; or the downlink indication corresponding to the at least one piece of data information or at least one data channel. At this time, based on the explicit indication of the second control information, the terminal device may determine that the at least one piece of data information or at least one data channel is associated with the second control information.

Using explicit indication can enhance the scheduling flexibility of the second control information, meaning that a single piece of second control information may modify and/or supplement the transmission parameter for one or more specified data transmissions or for all subsequent data transmissions, or even cancel the data transmission.

In the case of implicit indication, the identification information of the first data information or the data channel may be indicated by at least one of the following: the DCI format of the second control information, the scrambling sequence, or the resources corresponding to the second control information.

Optionally, at least one piece of data information or at least one data channel associated with the second control information includes: the data information or data channel closest to the second control information; or, the data information or data channel closest to the time-domain position corresponding to the second control information; or, the next data information or data channel closest to the second control information; or, the closest data information or data channel that is no earlier than the first processing time from the end position of the second control information; or, on the activated BWP of the first serving cell, the data information or data channel closest to the end position of the second control information; or, on the activated BWP of the first serving cell, the data information or data channel closest to the end position of the second control information, the closest data information or data channel meeting the processing time corresponding to the terminal.

Optionally, at least one piece of data information or at least one data channel associated with the second control information includes: the n pieces of data information or the n data channels closest to the second control information; or, the n pieces of data information or the n data channels closest to the time-domain position corresponding to the second control information; or, the subsequent n pieces of data information or the subsequent n data channels closest to the second control information; or, the n pieces of closest data information or the n data channels that are no earlier than the first processing time from the end position of the second control information; or, on the activated BWP of the serving cell, the n pieces of data information or the n data channels closest to the end position of the second control information; or, on the activated BWP of the serving cell, the n pieces of data information or the n data channels closest to the end position of the second control information, all of the n pieces of data information or the n data channels meeting the processing time corresponding to the terminal device. n is a positive integer. For example, the start time of at least one piece of data information or at least one data channel associated with the second control information is in the M^{th} time slot from the end of the first indication information.

The first processing time is the time required by the terminal device to process control information and/or prepare data information. In some embodiments, the terminal expects that the start time of the data information or data channel closest to the second control information is no earlier than the first processing time from the end time of the second control information. It should be noted that the aforementioned start or start position may be an absolute time, or the start time or end time of the first time-domain unit occupied by the control information or data information; and the aforementioned end or end position may be an absolute time, or the start time or end time of the last time-domain unit occupied by the control information or data information.

By adopting the implicit indication mode, the payload size of the second control information can be further reduced, and the second control information only needs to carry limited information, thereby saving transmission resources of the control channel.

The resources of the second control information include at least one of time-domain resources, frequency-domain resources, and monitoring occasions. There are two modes to determine the resources corresponding to the second control information:

**Mode 1**: Indicated by the first indication information;
The first indication information includes an indication field for indicating the resource corresponding to the second control information, and the indication field may mean one or more indication fields. For example, these indication fields are used to indicate at least one of the following: the start position, length, and end position of the time-domain resource corresponding to the second control information; at least one of the start position, length, and end position of the frequency-domain resource corresponding to the second control information; at least one of the position and/or number of monitoring occasions, the search space set, the control resource set, and the PDCCH candidates corresponding to the second control information, and the like.

As exemplified in FIG. 9, the plurality of pieces of semi-static data information or the plurality of semi-static data channels are pre-configured by the complete DCI: data transmission 11, data transmission 12, data transmission 13, data transmission 14, and the like. When the plurality of pieces of semi-static data information or the plurality of semi-static data channels are for uplink transmission, transmission is carried out based on the periodic transmission opportunities of the uplink data channels (such as PUSCH opportunities); or when the plurality of pieces of semi-static data information or the plurality of semi-static data channels are for downlink transmission, transmission is carried out based on the periodic transmission opportunities of the downlink data channels (such as PDSCH opportunities). Other transmission parameters or most transmission parameters of the plurality of pieces of data information or the plurality of data channels are the same, such as the information type, the transmission channel, the TBS, and the like.

Then, the terminal device receives the first indication information, which is used for monitoring parameters of a plurality of PDCCH monitoring occasions (such as monitoring occasions 21, 22, 23, 24, and 25 in the figure). The plurality of PDCCH monitoring occasions are used to monitor differential DCI (also known as second control information). Assuming that a piece of differential DCI is detected during PDCCH monitoring occasion 21, the data transmission closest to this differential DCI is determined to be the data transmission on transmission opportunity 12 according to the implicit indication principle. Therefore, this differential DCI is used to modify, supplement, or cancel the data transmission on transmission opportunity 12. Similarly, assuming that another piece of differential DCI is detected during PDCCH monitoring occasion 23, the data transmission closest to this differential DCI is determined to be the data transmission on transmission opportunity 13 according to the implicit indication principle. Therefore, this differential DCI is used to modify, supplement, or cancel the data transmission on transmission opportunity 13.

**Mode 2:** Associated with the time-frequency resource used for transmitting the data information/channel.

In some embodiments, the time-frequency resource corresponding to the monitoring occasion of the control information/channel is determined based on the time-frequency resource corresponding to the transmission opportunity of the data information/channel. Optionally, the at least one piece of data information or at least one data channel is the semi-static data transmission or a part of semi-persistent data transmission. The time-frequency resource corresponding to the transmission opportunity of the data information/channel is indicated by the first indication information or is pre-configured.

In some embodiments, the resource corresponding to the second control information is located before the time-frequency resource of the data information or data channel corresponding to the second control information, and a first offset is present between the start position of the resource corresponding to the second control information and the start position of the time-frequency resource of the data information or data channel corresponding to the second control information.

In some embodiments, the resource corresponding to the second control information is determined based on the time-frequency resource of the data information or data channel corresponding to the second control information. A one-to-one relationship, a one-to-many relationship, or a many-to-one relationship is present between the resources corresponding to the second control information and the time-frequency resources of the data information or the data channel corresponding to the second control information.

Taking the resource corresponding to the second control information as the PDCCH monitoring occasion and the time-frequency resource corresponding to data transmission as the PDSCH/PUSCH opportunity as examples:
If each PDSCH/PUSCH opportunity corresponds to a plurality of PDCCH monitoring occasions, a one-to-many relationship is present. For instance, if each PDSCH/PUSCH opportunity corresponds to 2 PDCCH monitoring occasions, these 2 PDCCH monitoring occasions are used to monitor differential DCI.

If a plurality of PDSCH/PUSCH opportunities correspond to one PDCCH monitoring occasion, a many-to-one relationship is present. For example, the time-domain positions of three PDSCH/PUSCH opportunities correspond to one PDCCH monitoring occasion, which is used to monitor differential DCI. This differential DCI may modify, supplement, or cancel at least one piece of data information or at least one data channel on the three PDSCH/PUSCH opportunities.

If each PDCCH monitoring occasion corresponds to a plurality of PDSCH/PUSCH opportunities, a one-to-many relationship is present; or if a plurality of PDCCH monitoring occasions correspond to one PDSCH/PUSCH opportunity, a many-to-one relationship is present.

If a plurality of PDCCH monitoring occasions correspond to a plurality of PDSCH/PUSCH opportunities, a many-to-many relationship is present. For instance, the time-domain positions of 3 PDSCH/PUSCH opportunities correspond to 2 PDCCH monitoring occasions, which are used to monitor differential DCI. This differential DCI may modify, supplement, or cancel at least one piece of data information or at least one data channel on the 3 PDSCH/PUSCH opportunities.

As exemplarily shown in FIG. 10, activated semi-static PDSCH and PUSCH are present. The adjacent PDSCH opportunities and/or PUSCH opportunities occur in a period of P, and the PDSCH opportunities and PUSCH opportunities alternate. Simultaneously, the first indication information indicates monitoring occasions of a set of differential DCI (i.e., second control information), which precede each PDSCH/PUSCH opportunity, for example, with a certain offset. According to a one-to-one correspondence, each PDSCH/PUSCH opportunity corresponds to a PDCCH monitoring occasion. These PDCCH monitoring occasions are used to monitor differential DCI, which is used to modify or supplement the transmission parameter of at least one PDSCH/PUSCH located after the differential DCI, or alternatively, the differential DCI is used to cancel at least one PDSCH/PUSCH located after the differential DCI.

In the case where the resource corresponding to the second control information is associated with the time-frequency resources corresponding to the plurality of pieces of data information or the plurality of data channels, the second control information may also explicitly indicate or implicitly indicate at least one piece of data information or at least one data channel among the plurality of pieces of data information or the plurality of data channels, so as to modify the transmission parameter, supplement the transmission parameter, or cancel the transmission for the at least one piece of data information or at least one data channel.

In summary, when the data information group is a part of semi-static data information or data channel, the second control information may be used to modify or supplement all or a part of the transmission parameters for a part of data transmission within the data information group, or to cancel a part of data information or data channels. Since the second control information only needs to carry limited information, and thus its payload is relatively small. This ensures scheduling flexibility while saving transmission resources of the control channel.

### For Type 2: Data Information Group

The data information group includes at least one data information or data channel or transmission opportunity of the data channel.

In some embodiments, the first indication information is used to indicate the scheduling parameter of at least one information group. One or more of the at least one information group is the data information group. The scheduling parameters of the one or more information groups include the transmission parameter of the data information group.

The first indication information is used to indicate the transmission parameters of one or more data information groups. Each data information group includes at least one type of data information or data channel or transmission opportunity of the data channel.

In some embodiments, at least one data information group includes at least two types of data information or data channels or transmission opportunities of the data channels. In the embodiments, different types of data information or data channels differ in at least one of the following factors: the transmission channel, the information content, the information format, the information amount, the reliability requirement, or the latency requirement.

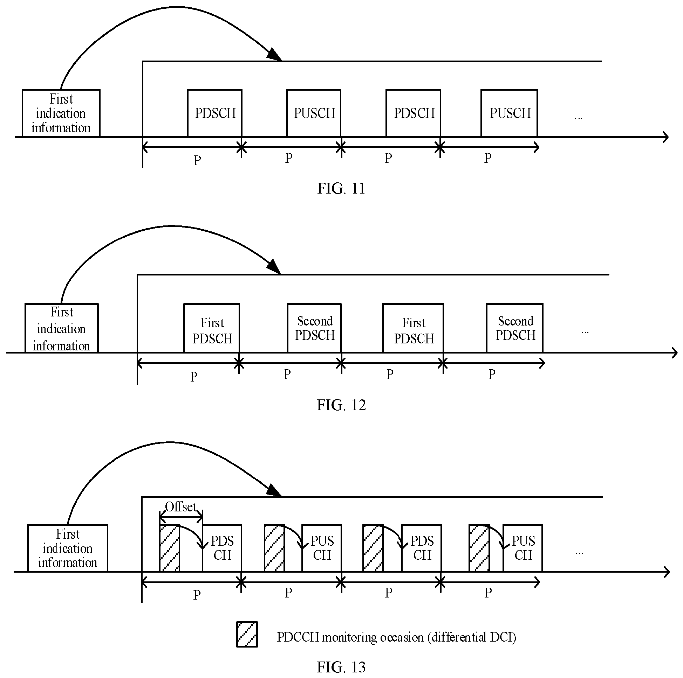

As exemplarily shown in FIG. 11, the first indication information is used to activate the semi-static PDSCH and PUSCH. The adjacent PDSCH opportunities and/or PUSCH opportunities occur in a period of P, and the PDSCH opportunities and PUSCH opportunities alternate. The PDSCH and PUSCH belong to different transmission channels, with the PDSCH used for transmitting downlink data and the PUSCH used for transmitting uplink data.

As exemplarily shown in FIG. 12, the first indication information is used to activate the semi-static first PDSCH and second PDSCH. The adjacent first PDSCH opportunity and/or second PDSCH opportunity occur in a period of P, and the first PDSCH opportunities and second PDSCH opportunities alternate. The PDSCH and PUSCH belong to different transmission channels, and the first PDSCH opportunities and second PDSCH opportunities are used to transmit downlink data with different information amounts, different information formats, and different information contents.

In summary, by transmitting at least two types of data information or data channels within a single data information group, as opposed to traditional semi-static transmission, efficient scheduling can be achieved in certain communication scenarios.

For example, remote medical devices and servers always adopt a "request-response" uplink-downlink combined communication pattern. When the data volume of each request and response is predictable, one or more pieces of first indication information may be used to indicate the transmission parameter within a longer period of time to the remote medical devices and servers , saving control signaling resources while ensuring lower latency (because there is no need for intermediate control signaling, or only a small amount of differential control signaling is required, the interval between two adjacent pieces of data information or two adjacent data channels can be shorter).

For another example, the server first transmits instruction information to the robotic arm, which is carried on the PDSCH. This instruction information requires the robotic arm to respond to it after a certain period of time, and the response information is carried on the PUSCH. The first indication information indicates the transmission parameter of a data information group, which includes at least two pieces of information from the PDSCH and PUSCH.

### For Type 3: Mixed Information Group

In some embodiments, the first indication information is used to indicate the scheduling parameter of at least one information group. One or more of the at least one information group is a mixed information group. The scheduling parameters of the one or more information groups include the transmission parameter of the data information or data channel, and the monitoring parameter of the control information or control channel.

The mixed information group includes at least one type of data information or data channel or transmission opportunity of the data channel, as well as at least one type of control information or control channel or monitoring occasion of the control channel.

The first indication information is used to indicate the monitoring parameters and/or transmission parameters of one or more mixed information groups.

The data information or data channel includes at least one of the following: uplink data information, downlink data information, sidelink data information, an uplink data channel, a downlink data channel, a sidelink data channel, uplink shared information, downlink shared information, sidelink shared information, an uplink shared channel, a downlink shared channel, or a sidelink shared channel.

The control information or control channel includes at least one of the following: uplink control information, downlink control information, sidelink control information, an uplink control channel, a downlink control channel, or a sidelink control channel.

In some embodiments, the information types of control information or control channel include at least one of the following: configuration information; grant information; allocation information; DCI; physical layer control signaling; higher layer signaling; RRC signaling; MAC signaling; UCI; feedback acknowledgment information; channel state information; SR; BSR; or uplink channel demodulation reference information.

In some embodiments, the feedback acknowledgment information includes at least one of the following: an ACK, or an NACK.

In some embodiments, the channel state information includes at least one of the following: the CSI, the CQI, the PMI, or the RI.

As exemplarily shown in FIG. 13, the first indication information is used to activate the semi-static PDSCH and PUSCH. The adjacent PDSCH opportunity and/or PUSCH opportunity occur in a period of P, and the PDSCH opportunities and PUSCH opportunities alternate. At the same time, the first indication information also indicates monitoring occasions of a set of differential DCI (i.e., second control information), which are located at a certain offset before each PDSCH/PUSCH opportunity. Therefore, the first indication information indicates a mixed information group, which includes a plurality of pieces of information of three types of information or channels: the PDSCH, the PUSCH, and the PDCCH.

In the embodiments, the first indication information may simultaneously indicate the transmission parameter of the data information/channel and the monitoring parameter of the control information/channel. One or more pieces of first indication information may be used to indicate the transmission parameter and/or monitoring parameter within a longer period of time to the first communication device, saving resources of control signaling while ensuring lower latency (because no intermediate control signaling is required, or only a small amount of differential control signaling is required, the interval between two adjacent pieces of data information or two adjacent data channels can be shorter).

For instance, in a virtual reality scenario, the XR terminal first reports its pose information to the server via the PUCCH. Based on this pose information, and the server renders the environmental information in virtual reality and transmits the rendered environmental scene to the XR terminal via the PDSCH. The first indication information indicates the transmission parameter of a mixed information group, which includes at least two pieces of information from both the PUCCH and the PDSCH.

It should be noted that in the above embodiments, examples are mainly given where adjacent information transmissions within each information group are at equal intervals, or where adjacent information transmissions of the same type are at equal intervals. However, the embodiments of the present disclosure are not limited to this. Adjacent information transmissions within an information group may be at non-equal intervals, or adjacent information transmissions of the same type may be at non-equal intervals. That is, an information group includes at least two aperiodic pieces of information. By supporting aperiodic information groups, efficient scheduling in more complex communication scenarios can be accommodated. Even if a plurality of pieces of information between two communication devices are aperiodic, efficient centralized scheduling can be achieved using the first indication information.

It should also be noted that a piece or a group of first indication information may indicate a plurality of information groups, including at least one of the following: the control information group, the data information group, or the mixed information group.

### First indication information:

The first indication information is used to indicate the scheduling parameters of one or more information groups, and the scheduling parameters include: the monitoring parameter of the control information or control channel, and/or the transmission parameter of the data information or data channel. The first indication information may be RRC signaling, the MAC control element (CE) signaling, or the DCI. The first indication information includes at least one of the following three design modes:

### Design 1:

The first indication information includes: a first index value, which is associated with a set of scheduling parameters of an information group. The correspondence between the first index value and the set of scheduling parameters is predefined in the protocol or pre-configured by the network device. The scheduling parameters include: the monitoring parameter of the control channel, and/or the transmission parameter of the data channel.

In some embodiments, the network device pre-configures the correspondence between a plurality of index values and a plurality of sets of scheduling parameters to the terminal device. Each set of scheduling parameters includes one or more scheduling parameters. The types of scheduling parameters in different sets of scheduling parameters may be the same or different; and the numbers of scheduling parameters in different sets of scheduling parameters may be the same or different. Table 1 exemplarily illustrates the above correspondence.

**Table 1**

| Index value | Scheduling Parameter 1 | Scheduling Parameter 2 | Scheduling Parameter 3 | Scheduling Parameter 4 | Scheduling Parameter 5 |
|---|---|---|---|---|---|
| 00 | Time-domain resource 1 | Frequency-domain resource 1 | Information format 1 | Reliability requirement 1 | Latency requirement 1 |
| 01 | Time-domain resource 2 | Frequency-domain resource 2 | Information format 2 | Reliability requirement 2 | Latency requirement 2 |
| 10 | Time-domain resource 3 | Frequency-domain resource 3 | Information format 3 | Reliability requirement 3 | Latency requirement 3 |
| 11 | Time-domain resource 4 | Frequency-domain resource 4 | Information format 4 | Reliability requirement 4 | Latency requirement 4 |

Table 1 is merely an exemplary illustration of one possible design. In different embodiments, the types and numbers of the aforementioned scheduling parameters may vary, and are not elaborated here.

If the first indication information includes an index value of 00, it indicates that a set of scheduling parameters for an information group includes: time-domain resource 1, frequency-domain resource 1, information format 1, reliability requirement 1, and latency requirement 1.

Through Design 1, the overhead of the first indication information is relatively small, requiring only a few bits to indicate a set of scheduling parameters.

### Design 2:

The first indication information includes at least one indication field. Each of the at least one indication field is used to indicate a type of scheduling parameter of an information group; and different indication fields indicate different types of scheduling parameters. For example, the first indication information includes a time-domain resource indication field, a frequency-domain resource indication field, an information format indication field, a reliability indication field, a latency requirement indication field, and the like.

In some embodiments, an information group includes at least two types of information. The first indication information further includes an information type indication field, which is used to indicate one type of information (the data information, the control information, the monitoring occasion, the data channel, the control channel, or the transmission opportunity).

In some embodiments, each information type indication field corresponds to a set of scheduling parameter indication fields, and different information type indication fields correspond to different sets of scheduling parameter indication fields. For example, the first indication information includes: (data channel 1, time-domain resource indication field 1, frequency-domain resource indication field 1, information format indication field 1, reliability indication field 1, latency requirement indication field 1), and (data channel 2, time-domain resource indication field 2, frequency-domain resource indication field 2, information format indication field 2, reliability indication field 2, latency requirement indication field 2).

In some embodiments, each information type indication field corresponds to a set of scheduling parameter indication fields, and different information type indication fields correspond to different sets of scheduling parameter indication fields. Meanwhile, the first indication information also includes a scheduling parameter indication field shared by different information types. For example, the first indication information includes: (data channel 1, time-domain resource indication field 1, frequency-domain resource indication field 1), (data channel 2, time-domain resource indication field 2, frequency-domain resource indication field 2), a common information format indication field, a common reliability indication field, and a common latency requirement indication field.

In some embodiments, an information group includes at least two pieces of information or at least two channels, and the first indication information further includes: an information transmission indication field, which is used to indicate at least one type of information or channel.

In some embodiments, each information transmission indication field corresponds to a set of scheduling parameter indication fields, and different information transmission indication fields correspond to different sets of scheduling parameter indication fields. For example, the first indication information includes: (1^{st} information, time-domain resource indication field 1, frequency-domain resource indication field 1, information format indication field 1, reliability indication field 1, latency requirement indication field 1), (2 information, time-domain resource indication field 2, frequency-domain resource indication field 2, information format indication field 2, reliability indication field 2, latency requirement indication field 2), (3^{rd} to 5th information, time-domain resource indication field 3, frequency-domain resource indication field 3, information format indication field 3, reliability indication field 3, latency requirement indication field 3).

In some embodiments, each information transmission indication field corresponds to a set of scheduling parameter indication fields, and different information transmission indication fields correspond to different sets of scheduling parameter indication fields. Meanwhile, the first indication information also includes common scheduling parameter indication fields of different information transmissions. For example, the first indication information includes: (1^{st} information, time-domain resource indication field 1, frequency-domain resource indication field 1), (subsequent information transmissions except for 1^{st} information, time-domain resource indication field 2, frequency-domain resource indication field 2), a common information format indication field, a common reliability indication field, and a common latency requirement indication field.

Through Design 2, it is possible to indicate the scheduling parameter of each dimension with greater precision, demonstrating higher flexibility in indication.

### Design 3:

The first indication information is used to indicate the scheduling parameters of the first x pieces of information or the first x channels among n pieces of information or n channels. n is a positive integer greater than 1, and x is a positive integer not greater than n. The scheduling parameters of the first x pieces of information or the first x channels may be indicated using Design 1 and/or Design 2 mentioned above.

All or a part of the scheduling parameters for the information or channels other than the first x pieces of information or the first x channels among n pieces of information or n channels are determined based on at least one of the following modes:

### Mode 1: Scheduling parameters for the first x pieces of information or the first x channels;

For example, all or a part of the scheduling parameters for the information or channels other than the first x pieces of information or the first x channels among n pieces of information or n channels are consistent with or generated according to the same rule as the scheduling parameters of the first x pieces of information or the first x channels.

For example, if the channel state changes little over a period of time, and the uplink and downlink channel exhibits reciprocity, the channel states for a plurality of uplink and downlink transmissions during this period may be considered identical or similar, allowing for the sharing of at least one scheduling parameter such as the same or associated frequency-domain resources, MCS, redundancy version, and the like. At this time, the scheduling parameters of subsequent data channels may be obtained based on the scheduling parameters of the first x (such as the first) data channels indicated by the first indication information.

### Mode 2: The second indication information carried in at least one piece of information or at least one channel among the first x pieces of information or the first x channels;

For example, the second indication information is carried in all or a part of the first x pieces of information or the first x channels, or a specific piece of information or a specific channel. This second indication information is used to indicate all or a part of the scheduling parameters of other pieces of information or other channels. Optionally, the design of the second indication information may also adopt a similar approach to Design 1 or Design 2.

### Mode 3: Scheduling parameter predefined in the protocol;

All or a part of the scheduling parameters of the information or channels other than the first x pieces of information or the first x channels among the n pieces of information or the n channels are determined according to the scheduling parameter predefined in the communication protocol. For example, a part of the scheduling parameters of the information or channels other than the first x pieces of information or the first x channels among the n pieces of information or the n channels are determined according to the scheduling parameter predefined in the communication protocol.

### Mode 4: The second index value carried in the first indication information, where the second index value is associated with a set of scheduling parameters;

The correspondence between the second index value and a set of scheduling parameters is predefined in the protocol or pre-configured by the network device. This correspondence can be similar to that in Table 1, and will not be further elaborated here.

For example, the first indication information carries the scheduling parameters of the first x pieces of information or the first x channels, as well as a second index value. This second index value is associated with a set of scheduling parameters. A part of the scheduling parameters of other pieces of information or other channels is determined based on the second index value, while the remaining part of the scheduling parameters remains consistent with or is generated according to the same rule as the scheduling parameters of the first x pieces of information or the first x channels.

### Mode 5: The indication field of the first indication information, where the indication field is used to configure at least one scheduling parameter for other pieces of information or other channels;

For example, in addition to indicating the scheduling parameters of the first x pieces of information or the first x channels, the first indication information also carries at least one indication field, which is used to configure at least one scheduling parameter for other pieces of information or other channels. In some embodiments, an information group includes at least two types of information, and the first indication information further includes: at least two information type indication fields, each corresponding to an information type. Each information type indication field corresponds to a set of scheduling parameter indication fields, and different information type indication fields correspond to different sets of scheduling parameter indication fields.

In some embodiments, an information group includes at least two types of information. The first indication information further includes at least two information type indication fields, each of which is used to indicate an information type (the data information, the control information, the data channel, or the control channel). Each information type indication field corresponds to an index value or a set of scheduling parameter indication fields, and different information type indication fields correspond to their respective index values or sets of scheduling parameter indication fields. For example, the first indication information includes: (data channel 1, first index value 1), (control channel 1, first index value 2), and (data channel 2, first index value 3).

Through Design 3, it is possible to balance indication flexibility and signaling overhead. On the premise of ensuring flexibility, the signaling overhead of the first indication information can be minimized. At the same time, the aforementioned three designs can be freely combined to design the first indication information suitable for the current information group based on its transmission characteristics, thus balancing indication flexibility and signaling overhead.

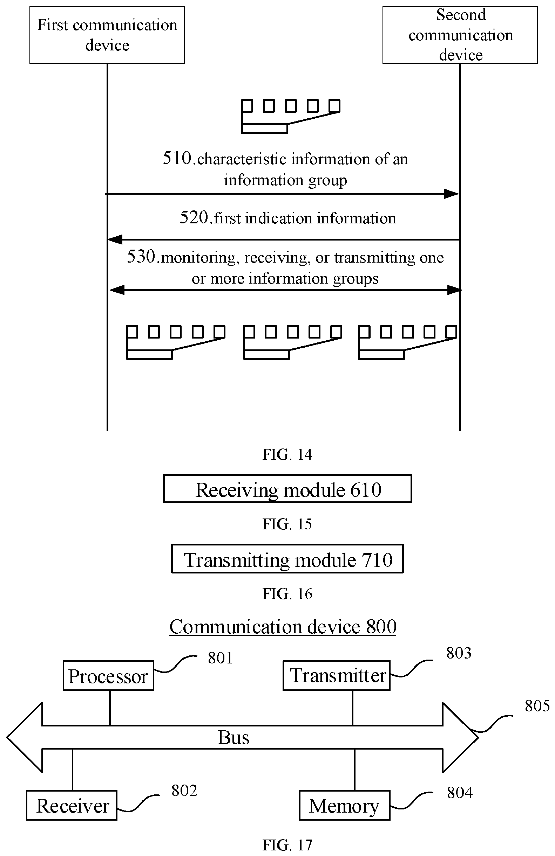

FIG. 14 illustrates a flowchart of a method for transmitting indication information provided by some exemplary embodiments of the present disclosure. The method is performed by a communication device and includes the following steps:
**Step 510**: the first communication device transmits characteristic information of an information group to the second communication device.

The characteristic information is used to determine the characteristic corresponding to an information group between the first communication device and the second communication device, and one information group includes at least one piece of information.

In some embodiments, the characteristic information of the information group is used to determine the characteristic information corresponding to at least one information group between the first communication device and the second communication device, and each of the at least one information group includes at least two pieces of information.

In some embodiments, the characteristic information of the information group is used to determine the characteristic information corresponding to at least one set of information transmissions between the first communication device and the second communication device, and each information group in the at least one set of information transmissions includes at least two pieces of information.

By bundling at least two pieces of information into a group for transmission, it facilitates the second communication device to obtain the characteristic information of a plurality of pieces of related information.

In some embodiments, an information group may be periodic or aperiodic. In some embodiments, when the occurrence of a set of information transmissions is periodic, the first communication device also transmits a first parameter to the second communication device, where the first parameter is used to indicate the periodicity of the occurrence of an information group.

In some embodiments, the first communication device is a terminal device, and the second communication device is a network device; or, the first communication device is a network device, and the second communication device is a terminal device. In the case where the first communication device is a terminal device and the second communication device is a network device, the terminal device reports the characteristic information of the information group to the network device, for example, the terminal reports the characteristic information of the information group to the base station; or in the case where the first communication device is a first terminal device and the second communication device is a second terminal device, the first terminal device transmits the characteristic information of the information group to the second terminal device.

In some embodiments, the characteristic information includes at least one of the following: the time information of at least one of the at least two pieces of information; the information type of at least one of the at least two pieces of information; the information content of at least one of the at least two pieces of information; the information format of at least one of the at least two pieces of information; the transmission channel of at least one of the at least two pieces of information; the information amount-related information of at least one of the at least two pieces of information; the reliability requirement of at least one of the at least two pieces of information; or the latency requirement of at least one of the at least two pieces of information.

**Step 520**: the second communication device transmits the first indication information to the first communication device, where the first indication information is used to indicate a scheduling parameter of the information group.

In some embodiments, the first indication information is used to indicate the monitoring parameter of a control information group. The monitoring parameter includes at least one of the following: the time parameter for monitoring the control channel; the search space or search space set for monitoring the control channel; the control resource set for monitoring the control channel; the monitoring occasion parameter for monitoring the control channel; the control information format to be monitored; the control information size to be monitored; or the candidate control channel to be monitored.

In some embodiments, the first indication information is used to indicate the transmission parameter of a data information group. The transmission parameter includes at least one of the following: the time-domain resource; the frequency-domain resource; the MCS; the TBS; the transmission mode; the HARQ process; or the redundancy version. Optionally, a data information group includes information transmission of at least two types of data information or data channels.

In some embodiments, the first indication information is used to indicate the monitoring parameter and/or transmission parameter of a mixed information group. The mixed information group includes at least one type of data information or data channel or transmission opportunity of a data channel, and at least one type of control information or control channel or monitoring occasion of a control channel.

In some embodiments, an information group includes at least two pieces of aperiodic information and/or at least two pieces of periodic information.

**Step 530**: the first communication device monitors, receives, or transmits at least one information group based on the first indication information.

The first communication device, based on the first indication information, monitors at least one control information group; and/or transmits or receives at least one data information group; and/or transmits or receives at least one mixed information group. Optionally, the aforementioned information groups may also be transmitted periodically or aperiodically. In the case of periodic transmission, the first indication information may also carry the periodic parameter of the information group.

In summary, in the method provided in the embodiments, the first terminal device reports the transmission characteristic information of an information group first, and the second terminal device generates the first indication information for the information group based on the transmission characteristic information of the information group. In subsequent transmissions, the first terminal device may implement monitoring or transmission using the information group as the scheduling unit based on the first indication information, which can save control signaling overhead and improve the transmission efficiency of the communication system.

FIG. 15 shows a block diagram of an apparatus for transmitting indication information provided in some exemplary embodiments of the present disclosure. The apparatus for transmitting indication information includes the following modules:

The receiving module 610 is configured to receive first indication information, which is used to indicate the scheduling parameters of one or more information groups.

Each information group includes at least one piece of information or at least one channel. In some embodiments, the information group includes at least one piece of information or at least one channel that is monitored or transmitted within a certain period of time. In some embodiments, the first indication information is used to indicate the scheduling parameter of at least one information group. These scheduling parameter includes: a monitoring parameter of the control information or control channel, and/or a transmission parameter of the data information or data channel.

For the introduction of the information group and the first indication information, please refer to the contents following FIG. 3 and FIG. 4 mentioned above, which will not be elaborated further here.

In some embodiments, the apparatus for transmitting indication information further includes a processing module, which is used for parsing the first indication information.

In some embodiments, the aforementioned receiving module 610 is further configured to monitor the control information or control channel based on the aforementioned monitoring parameter; and/or to receive the data information or data channel or control information or control channel based on the aforementioned transmission parameter.

In some embodiments, the apparatus for transmitting the indication information further includes a transmitting module, which is configured to transmit the data information or data channel or control information or control channel based on the aforementioned scheduling parameter. The aforementioned receiving module may be implemented by a receiver, or a receiver and a processor; the aforementioned processing module may be implemented by a processor, or a processor and a memory; and the aforementioned transmitting module may be implemented by a transmitter, or a transmitter and a processor.

In summary, the apparatus provided in the embodiments receives first indication information, which is used to indicate the monitoring or transmission parameter of an information group. This information group includes at least one piece of information. The method schedules with the granularity of "one set of information transmissions", which can save signaling overhead, improve the transmission efficiency of the communication system, and reduce the overhead of blind detection of the control channel by terminals, thereby reducing terminal power consumption.

FIG. 16 illustrates a block diagram of an apparatus for transmitting indication information provided in some exemplary embodiments of the present disclosure. The apparatus for transmitting indication information includes the following module:
The transmitting module 710 is configured to transmit first indication information, which is used to indicate the scheduling parameters of one or more information groups.

Each information group includes at least one piece of information or at least one channel. In some embodiments, the information group includes at least one piece of information or at least one channel that is monitored or transmitted over a period of time. In some embodiments, the first indication information is used to indicate the scheduling parameter of at least one information group. These scheduling parameter includes: a monitoring parameter of the control information or control channel, and/or a transmission parameter of the data information or data channel.

For the introduction to the information group and the first indication information, please refer to the contents following FIG. 3 and FIG. 4 mentioned above, which will not be elaborated further here.

In some embodiments, the apparatus for transmitting indication information further includes a processing module for generating the first indication information.

In some embodiments, the aforementioned receiving module is further configured to monitor the control information or control channel based on the aforementioned monitoring parameter; and/or to receive the data information or data channel or control information or control channel based on the aforementioned transmission parameter.

In some embodiments, the apparatus for transmitting indication information further includes a transmitting module 710, which is configured to transmit the data information or data channel or control information or control channel based on the aforementioned scheduling parameter.

The aforementioned receiving module may be implemented by a receiver, or a receiver and a processor; the processing module may be implemented by a processor, or a processor and a memory; and the transmitting module may be implemented by a transmitter, or a transmitter and a processor.

In summary, the apparatus provided in the embodiments receives first indication information, which is used to indicate the monitoring or transmission parameter of an information group. This information group includes at least one piece of information. The method schedules at the granularity of "one set of information transmissions", which can save signaling overhead, improve the transmission efficiency of the communication system, and reduce the overhead of blind detection of the control channel by the terminal, thereby reducing terminal power consumption.

FIG. 17 illustrates a structural schematic diagram of a communication device 800 provided in some exemplary embodiments of the present disclosure. The communication device 800 includes: a processor 801, a receiver 802, a transmitter 803, a memory 804, and a bus 805.

The processor 801 includes one or more processing cores, and executes various functional applications and information processing by running software programs and modules. The receiver 802 and the transmitter 803 may be implemented as a transceiver component, which may be a communication chip and is referred to as a transceiver. In some embodiments, the receiver 802 may be used to implement the functions and steps related to the aforementioned receiving module. In some embodiments, the transmitter 803 may be used to implement the functions and steps related to the aforementioned transmitting module.

The memory 804 is connected to the processor 801 through the bus 805. In some embodiments, the bus 805 may also be replaced with a simpler circuit connection. The memory 804 may be used to store at least one instruction, and the processor 801 is used to execute the at least one instruction to implement the various steps in the above-mentioned method embodiments.

In addition, the memory 804 may be implemented by any type of volatile or non-volatile storage device, or a combination thereof. The volatile or non-volatile storage device includes, but is not limited to: a magnetic or optical disk, an electrically-erasable programmable read only memory (EEPROM), an erasable programmable read only memory (EPROM), a static random access memory (SRAM), a read-only memory (ROM), a magnetic storage, a flash memory, and a programmable read-only memory (PROM).

In some embodiments, the receiver 802 performs signal/data reception independently, or the processor 801 controls the receiver 802 to perform signal/data reception, or the processor 801 requests the receiver 802 to perform signal/data reception, or the processor 801 cooperates with the receiver 802 to perform signal/data reception.

In some embodiments, the transmitter 803 transmits signals/data independently, or the processor 801 controls the transmitter 803 to transmit signals/data, or the processor 801 requests the transmitter 803 to transmit signals/data, or the processor 801 cooperates with the transmitter 803 to transmit signals/data.

In exemplary embodiments, a computer-readable storage medium is also provided, in which at least one program is stored. The at least one program is loaded and run by a processor to perform the method for transmitting indication information provided by the various method embodiments described above.

In exemplary embodiments, a computer program product or computer program is also provided, which includes computer instructions stored in a computer-readable storage medium. The processor retrieves the computer instructions from the computer-readable storage medium and executes them to perform the method for transmitting indication information provided by the various method embodiments described above.

Those skilled in the art can understand that all or a part of the steps for implementing the above embodiments can be accomplished through hardware, or alternatively, by instructing the relevant hardware through a program. The program can be stored in a computer-readable storage medium, and the aforementioned storage medium can be a read-only memory, a magnetic disk, an optical disk, or the like.

Described above are merely optional embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for transmitting indication information, comprising:
receiving or transmitting first indication information, wherein the first indication information is used to indicate a scheduling parameter of at least one information group.

2. The method according to claim 1, wherein one of the at least one information group is a control information group, wherein the control information group comprises at least one piece of control information or at least one control channel, and the scheduling parameter of the at least one information group comprises a monitoring parameter of the control information group.

3. The method according to claim 2, wherein the monitoring parameter of the control information group is a subset of monitoring parameters pre-configured for the at least one piece of control information or the at least one control channel.

4. The method according to claim 3, wherein the monitoring parameter comprises at least one of:
a time parameter for monitoring the at least one control channel; a search space for monitoring the at least one control channel; a search space set for monitoring the at least one control channel; a control resource set for monitoring the at least one control channel; a monitoring occasion parameter for monitoring the at least one control channel; a control information format to be monitored; a control information size to be monitored; or a candidate control channel to be monitored.

5. The method according to claim 4, wherein the time parameter comprises at least one of:
a start time for monitoring the at least one control channel; an end time for monitoring the at least one control channel; or a duration for monitoring the at least one control channel.

6. The method according to claim 4, wherein the monitoring occasion parameter comprises at least one of:
a start monitoring occasion for monitoring the at least one control channel; an end monitoring occasion for monitoring the at least one control channel; or a number of monitoring occasions for monitoring the at least one the control channel.

7. The method according to any one of claims 4 to 6, wherein the monitoring parameter of the control information group being the subset of the monitoring parameters pre-configured for the at least one control information or the at least one control channel comprises at least one of:
a monitoring time corresponding to the time parameter of the control information group being a part of a monitoring time corresponding to a time parameter pre-configured for the at least one piece of control information or the at least one control channel;
the search space of the control information group being a part of a search space pre-configured for the at least one piece of control information or the at least one control channel;
the search space set of the control information group being a part of a search space set pre-configured for the at least one piece of control information or the at least one control channel;
the control resource set of the control information group being a part of a control resource set pre-configured for the at least one piece of control information or the at least one control channel;
the monitoring occasion for the control information group being a part of a monitoring occasion pre-configured for the at least one piece of control information or the at least one control channel;
the control information format of the control information group being a part of a control information format pre-configured for the at least one piece of control information or the at least one control channel;
the control information size of the control information group being a part of a control information size pre-configured for the at least one piece of control information or the at least one control channel; or
the candidate control channel of the control information group being a part of a candidate control channel pre-configured for the at least one piece of control information or the at least one control channel.

8. The method according to claim 2, wherein the at least one piece of control information comprises at least one of first control information or second control information; wherein
the first control information is used to indicate at least one type of transmission parameter of at least one piece of data information or at least one data channel; and
the second control information is used to indicate at least one type of modification information, supplementary information, or cancellation information for the at least one piece of data information or the at least one data channel;
wherein the modification information is used to modify one or more transmission parameters among the at least one type of transmission parameter; the supplementary information is used to supplement another transmission parameter other than the at least one type of transmission parameter; and the cancellation information is used to cancel first data transmission.

9. The method according to claim 8, wherein the second control information carries: identification information of a piece of first data information or a data channel.

10. The method according to claim 9, wherein identification information of the at least one piece of data information or the at least one data channel comprises at least one of:
an index of a serving cell where the at least one piece of data information or the at least one data channel is located;
an index of a bandwidth part (BWP) where the at least one piece of data information or the at least one data channel is located;
a time-domain resource location of the at least one piece of data information or the at least one data channel;
a frequency-domain resource location of the at least one piece of data information or the at least one data channel;
a serial number of the at least one piece of data information or the at least one data channel within a time-domain unit;
an uplink indication corresponding to the at least one piece of data information or the at least one data channel; or
a downlink indication corresponding to the at least one piece of data information or the at least one data channel.

11. The method according to claim 8, wherein
the at least one piece of data information or the at least one data channel comprises a piece of data information or a data channel closest to the second control information; or
the at least one piece of data information or the at least one data channel comprises: a closest piece of data information or a closest data channel that is no earlier than a first processing time from an end position of the second control information.

12. The method according to claim 11, further comprising:
expecting, by a terminal, a start of the closest data information or data channel to be no earlier than the first processing time from an end of the second control information.

13. The method according to any one of claims 8 to 12, wherein a resource corresponding to the second control information is associated with the at least one piece of data information or the at least one data channel.

14. The method according to claim 13, wherein the resource corresponding to the second control information is determined based on a time-frequency resource corresponding to a piece of first data information or a data channel.

15. The method according to claim 14, wherein the resource corresponding to the second control information is located before a time-frequency resource of a piece of data information or a data channel corresponding to the second control information, and a first offset is present between a start position of the resource corresponding to the second control information and a start position of the time-frequency resource of the piece of data information or the data channel corresponding to the second control information.

16. The method according to claim 15, wherein a one-to-one relationship, or a one-to-many relationship, or a many-to-one relationship is present between resources corresponding to the second control information and time-frequency resources of the piece of data information or the data channel corresponding to the second control information.

17. The method according to any one of claims 1 to 16, wherein the transmission parameter comprises at least one of:
a time-domain resource location; a frequency-domain resource location; a modulation and coding scheme (MCS); a transport block size (TBS); a transmission mode; a hybrid automatic repeat request (HARQ) process; or a redundancy version.

18. The method according to any one of claims 1 to 3, wherein one of the at least one information group comprises:
at least two types of data information or data channels; and/or at least one type of data information or data channel, and at least one type of control information or control channel.

19. The method according to any one of claims 1 to 3, wherein one of the at least one information group comprises:
at least two pieces of aperiodic information.

20. The method according to any one of claims 1 to 19, wherein the first indication information comprises a first index value;
wherein the first index value is associated with a set of scheduling parameters of the at least one information group, and a correspondence between the first index value and the set of scheduling parameters is predefined in a protocol or pre-configured by a network device.

21. The method according to any one of claims 1 to 19, wherein the first indication information comprises at least one indication field;
wherein each of the at least one indication field is used to indicate a type of scheduling parameter of the at least one information group, and different indication fields indicate different types of scheduling parameters.

22. The method according to any one of claims 1 to 21, wherein the first indication information comprises:
scheduling parameters of first x pieces of information or first x channels among n pieces of information or n channels, wherein n is a positive integer greater than 1, and x is a positive integer not greater than n.

23. The method according to claim 22, wherein all or a part of scheduling parameters of other pieces of information or other channels among the n pieces of information or the n channels, excluding the first x pieces of information or the first x channels, are determined based on at least one of:
the scheduling parameters of the first x pieces of information or the first x channels;
second indication information carried in at least one piece of information or at least one channel among the first x pieces of information or the first x channels;
pre-defined scheduling parameters in a protocol;
a second index value carried in the first indication information, wherein the second index value is associated with a set of scheduling parameters; or
an indication field of the first indication information, wherein the indication field is used to indicate the scheduling parameters of the other pieces of information or the other channels;
wherein a correspondence between the second index value and the set of scheduling parameters is predefined in the protocol or pre-configured by a network device.

24. The method according to any one of claims 1 to 23, wherein the at least one information group comprises at least one type of information, wherein the at least one type of information comprises at least one of:
downlink control information; uplink control information; downlink data information; uplink data information; downlink information; uplink information; downlink synchronization information; broadcast information; multicast information; unicast information; terminal-specific downlink information; or reference signal information.

25. The method according to any one of claims 1 to 23, wherein the at least one information group comprises at least one type of channel, wherein the at least one type of channel comprises at least one of:
downlink control channel; downlink data channel; downlink shared channel; uplink control channel; uplink data channel; uplink shared channel; downlink synchronization channel; downlink broadcast channel; downlink multicast channel; downlink unicast channel; terminal-specific channel; or uplink synchronization channel.

26. An apparatus for transmitting indicating information, comprising:
a receiving module, configured to receive first indication information, wherein the first indication information is used to indicate a scheduling parameter of at least one information group; or
a transmitting module, configured to transmit first indication information, wherein the first indication information is used to indicate a scheduling parameter of at least one information group.

27. A communication device, comprising:
a processor; a transceiver connected to the processor; and a memory configured to store executable instructions of the processor;
wherein the processor is configured to load and execute the executable instructions to perform the method for transmitting indication information according to any one of claims 1 to 25.

28. A chip, wherein the chip is used to implement or perform the method for transmitting indication information according to any one of claims 1 to 25.

29. A computer-readable storage medium, storing: at least one program, wherein the at least one program is loaded and run by a processor to perform the method for transmitting indication information according to any one of claims 1 to 25.

30. A computer program product, comprising: computer instructions stored in a computer-readable storage medium, wherein the processor retrieves the computer instructions from the computer-readable storage medium, and the processor executes the computer instructions to perform the method for transmitting indication information according to any one of claims 1 to 25.
